(19) Europäisches Patentamt
European Patent Office
Office européen des brevets

(11) EP 4 053 185 B1

(12) **EUROPEAN PATENT SPECIFICATION**

(45) Date of publication and mention of the grant of the patent:
**21.01.2026 Bulletin 2026/04**

(21) Application number: **20881122.4**

(22) Date of filing: **29.10.2020**

(51) International Patent Classification (IPC):
***C08G 63/181*** *(2006.01)* ***C08L 67/02*** *(2006.01)*
***C08G 63/183*** *(2006.01)* ***C08G 63/672*** *(2006.01)*
***C08G 63/78*** *(2006.01)*

(52) Cooperative Patent Classification (CPC):
**C08G 63/672; C08G 63/181; C08G 63/183; C08G 63/78; C08L 67/02;** Y02W 90/10

(86) International application number:
**PCT/KR2020/014883**

(87) International publication number:
**WO 2021/086037 (06.05.2021 Gazette 2021/18)**

(54) **BIODEGRADABLE COPOLYMER POLYESTER RESIN COMPRISING ANHYDROSUGAR ALCOHOL AND ANHYDROUSUGAR ALCOHOL-ALKYLENE GLYCOL AND METHOD FOR PREPARING SAME**

BIOLOGISCH ABBAUBARES COPOLYMER-POLYESTERHARZ MIT ANHYDROZUCKERALKOHOL UND ANHYDROZUCKERALKOHOL-ALKYLENGLYKOL UND VERFAHREN ZU SEINER HERSTELLUNG

RÉSINE DE POLYESTER COPOLYMÈRE BIODÉGRADABLE COMPRENANT UN ALCOOL DE SUCRE ANHYDRE ET UN GLYCOL D'ALKYLÈNE -ALCOOL DE SUCRE ANHYDRE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2019 KR 20190136474**

(43) Date of publication of application:
**07.09.2022 Bulletin 2022/36**

(73) Proprietor: **Samyang Corporation**
**Jongno-gu**
**Seoul 03129 (KR)**

(72) Inventors:
- **LEE, Min Sun**
  **Daejeon 34020 (KR)**
- **KWON, Jae Kwan**
  **Sejong 30062 (KR)**
- **KIM, Mi Ran**
  **Daejeon 34050 (KR)**
- **CHANG, Yun Ju**
  **Daejeon 34020 (KR)**
- **KWON, Young Do**
  **Daejeon 34020 (KR)**
- **RYU, Hoon**
  **Daejeon 35235 (KR)**

(74) Representative: **Wohlfahrt, Jan Günther et al**
**Gleiss Große Schrell und Partner mbB**
**Patentanwälte Rechtsanwälte**
**Leitzstraße 45**
**70469 Stuttgart (DE)**

(56) References cited:
**JP-A- H10 298 271**
**KR-A- 20110 043 969**
**KR-A- 20140 031 010**
**KR-B1- 101 404 983**
**KR-B1- 101 826 754**
**US-A1- 2013 295 306**
**US-A1- 2019 161 574**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

[TECHNICAL FIELD]

The present invention relates to a biodegradable copolymer polyester resin comprising anhydrosugar alcohol and anhydrosugar alcohol-alkylene glycol and a method for preparing the same, and more specifically, to a polyester resin having excellent heat resistance and mechanical properties as well as excellent color value and biodegradability by copolymerizing a dicarboxylic component comprising an adipic acid or an ester thereof and a diol component comprising an anhydrosugar alcohol and anhydrosugar alcohol-alkylene glycol in a specific content and a method for preparing the same.

[BACKGROUND ART]

Hydrogenated sugar (also known as "sugar alcohol") refers to a compound obtained by adding hydrogen to the reducing terminal group of a saccharide. Generally, it has the formula $HOCH_2(CHOH)_nCH_2OH$ (wherein n is an integer of 2 to 5) and is classified into tetritol, pentitol, hexitol and heptitol (having 4, 5, 6 and 7 carbon atoms, respectively) depending on the number of carbon atoms. Among them, hexitol having 6 carbon atoms includes sorbitol, mannitol, iditol, galactitol and the like, and sorbitol and mannitol are particularly useful substances.

Anhydrosugar alcohol has a diol form with two hydroxyl groups in the molecule and can be prepared by utilizing hexitol derived from starch (for instance, Korean Patent No. 10-1079518 and Korean Patent Laid-open Publication No. 10-2012-0066904). Since anhydrosugar alcohol is an eco-friendly substance derived from renewable natural resources, there has been much interest for a long time, and studies of the production method have been carried out. Among these anhydrosugar alcohols, isosorbide prepared from sorbitol presently has the largest industrial application range.

Anhydrosugar alcohol is widely used in the treatment of cardiac and vascular diseases, adhesives for patches, drugs for mouthwash and the like, solvents for compositions in the cosmetics industry and emulsifiers in the food industry. In addition, it is possible to increase the glass transition temperature of a polymer such as polyester, PET, polycarbonate, polyurethane and epoxy resin, and to improve the strength of these materials, and it is also very useful in the plastics industry such as bioplastics since it is an eco-friendly material derived from natural materials. It is also known to be used as adhesives, eco-friendly plasticizers, biodegradable polymers and an eco-friendly solvent for water-soluble lacquers.

As such, anhydrosugar alcohol has attracted a great deal of attention due to its versatility, and its use in industry is increasing.

Meanwhile, efforts are being made to reduce the use of fossil resources in order to cope with their depletion, the increase of carbon dioxide in the atmosphere due to the mass consumption of petroleum resources and the global warming problem. In this regard, interest in environmentally circulating polymers is high, and studies on polyester resins using biomass raw materials such as anhydrosugar alcohol are being actively conducted.

Aliphatic polyester resins using biomass raw materials are widely used in fields such as packaging materials, molded products and films, and are one of the eco-friendly plastics that do not contain environmental hormones. In addition, by having biodegradability, they are attracting attention as eco-friendly materials that can solve the problem of environmental pollution caused by waste plastic, which has recently become an issue.

In recent years, in polycarbonate mainly used for heat-resistant food containers, as the harmfulness of bisphenol A has been revealed, the need for a polyester resin that is environmentally friendly, has transparency and heat resistance is increasing.

In the case of a conventional homopolyester composed of terephthalic acid and ethylene glycol, mechanical properties and heat resistance can be improved to some extent through crystallization by stretching and heat fixation, but there is a limit to the application use and improvement of heat resistance. Therefore, in recent years, a method of improving the heat resistance of the polyester resin has been developed by using isosorbide, which is a biomass-derived compound derived from starch, as a comonomer of a polyester resin. However, since isosorbide is a secondary alcohol which has low reactivity, it is known that it is difficult to form a polyester resin having a high viscosity used in the manufacture of sheets or bottles.

In addition, PBAT (polybutylene adipate-co-terephthalate) resin, which is a representative biodegradable aliphatic polyester resin, is a copolymer resin including aliphatic compounds and aromatic compounds, and can be processed in various ways. However, since its price is high, it is a cause of greatly increasing the cost of products such as packaging films manufactured by using it as a raw material, and it has disadvantages in which heat resistance and mechanical properties are inferior.

Accordingly, there is an urgent need to develop a polyester resin that is environmentally friendly and has more improved mechanical properties and heat resistance than those of conventional biodegradable polyester resins (e.g., PBAT resin), and has improved color value and biodegradability.

US 2019/0161574 A1 relates to a polyester resin comprising a repeating unit comprising a unit derived from an

anhydrosugar alcohol or a derivative thereof and a repeating unit derived from a polybasic acid component and a preparation method therefor.

US 2013/0295306 A1 relates to a copolymerized polyester resin composition comprising 95 to 99.99 weight % of a copolymerized polyester resin copolymerized with dicarboxylic acid components and diol components comprising isosorbide, having an alternating structure of dicarboxylic acid moieties which are derived from the dicarboxylic acid components and diol moieties which are derived from the diol components; and

0.01 to 5 weight % of an antioxidant selected from a group consisting of a hindered phenolic antioxidant, a phosphitic antioxidant, a thioetheric antioxidant and mixtures thereof; and a production method therefor.

KR 101 826 754 B1 relates to an eco-friendly polyester resin and a method for producing the same.

KR 101 404 983 B1 relates to a biodegradable copolyester resin and a method for producing the same.

[CONTENTS OF THE INVENTION]

[PROBLEMS TO BE SOLVED]

The purpose of the present invention is to provide a polyester resin having excellent heat resistance and mechanical properties as well as excellent color value and biodegradability by copolymerizing a dicarboxylic component comprising an adipic acid or an ester thereof and a diol component comprising an anhydrosugar alcohol and anhydrosugar alcohol-alkylene glycol in a specific content and a method for preparing the same.

[TECHNICAL MEANS]

In order to achieve the technical purpose, in the first aspect, the present invention provides a biodegradable polyester resin comprising a repeating unit derived from a dicarboxylic component; and a repeating unit derived from a diol component, wherein the dicarboxylic component comprises 30 to 70 mol% of an aliphatic dicarboxylic compound; and 30 to 70 mol% of an aromatic dicarboxylic compound, based on 100 mol% of the total dicarboxylic component, the aliphatic dicarboxylic compound comprises an adipic acid or an ester thereof, the diol component comprises 0.1 to 23 mol% of an anhydrosugar alcohol and 0.1 to 30 mol% of an anhydrosugar alcohol-alkylene glycol, based on 100 mol% of the total diol component, and the total content of anhydrosugar alcohol and anhydrosugar alcohol-alkylene glycol is 5 to 53 mol% based on 100 mol% of the total diol component.

In the second aspect, the present invention provides a method for preparing a biodegradable polyester resin comprising (1) a step of esterification reaction or transesterification reaction of a dicarboxylic component comprising an aliphatic dicarboxylic compound and an aromatic dicarboxylic compound and a diol component comprising an anhydrosugar alcohol and an anhydrosugar alcohol-alkylene glycol; and (2) a step of polycondensation reaction of the reaction product obtained in step (1), wherein the aliphatic dicarboxylic compound comprises an adipic acid or an ester thereof, the dicarboxylic component comprises 30 to 70 mol% of an aliphatic dicarboxylic compound; and 30 to 70 mol% of an aromatic dicarboxylic compound, based on 100 mol% of the total dicarboxylic component, the diol component comprises 0.1 to 23 mol% of an anhydrosugar alcohol and 0.1 to 30 mol% of an anhydrosugar alcohol-alkylene glycol, based on 100 mol% of the total diol component, and the total content of anhydrosugar alcohol and anhydrosugar alcohol-alkylene glycol is 5 to 53 mol% based on 100 mol% of the total diol component.

In the third aspect, the present invention provides a molded article comprising the biodegradable polyester resin according to the present invention.

[EFFECT OF THE INVENTION]

Anhydrosugar alcohol in the biodegradable polyester resin of the present invention can improve heat resistance by increasing the glass transition temperature ($T_g$), and anhydrosugar alcohol-alkylene glycol can improve color value. In addition, anhydrosugar alcohol and anhydrosugar alcohol-alkylene glycol may further improve biodegradability by disturbing the structural regularity of molecular chains in the biodegradable polyester resin. Therefore, since the biodegradable polyester resin of the present invention comprises anhydrosugar alcohol and anhydrosugar alcohol-alkylene glycol in a specific content range, thereby improving the heat resistance of the biodegradable polyester resin, maintaining excellent mechanical properties, while excellent color value and biodegradability can be further improved.

[CONCRETE MODE FOR CARRYING OUT THE INVENTION]

The present invention is explained in more detail below.

The biodegradable polyester resin of the present invention comprises a repeating unit derived from a dicarboxylic component; and a repeating unit derived from a diol component, wherein the dicarboxylic component comprises 30 to 70

mol% of an aliphatic dicarboxylic compound; and 30 to 70 mol% of an aromatic dicarboxylic compound, based on 100 mol% of the total dicarboxylic component, the aliphatic dicarboxylic compound comprises an adipic acid or an ester thereof, the diol component comprises 0.1 to 23 mol% of an anhydrosugar alcohol and 0.1 to 30 mol% of an anhydrosugar alcohol-alkylene glycol, based on 100 mol% of the total diol component, and the total content of anhydrosugar alcohol and anhydrosugar alcohol-alkylene glycol is 5 to 53 mol% based on 100 mol% of the total diol component.

The content of the aliphatic dicarboxylic compound comprised in the dicarboxylic component of the biodegradable polyester resin of the present invention may be 30 mol% or more, 35 mol% or more, 40 mol% or more, 45 mol% or more, or 50 mol% or more, and may be 70 mol% or less, 65 mol% or less, 60 mol% or less, 55 mol% or less, or 50 mol% or less-for example, 30 to 70 mol%, 40 to 65 mol% or 50 to 60 mol%, based on 100 mol% of the total dicarboxylic component. If the content of the aliphatic dicarboxylic compound is out of the above range, the glass transition temperature of the biodegradable polyester resin may be lowered, and heat resistance may decrease.

In addition, the content of the aromatic dicarboxylic compound comprised in the dicarboxylic component may be 30 mol% or more, 35 mol% or more, 40 mol% or more, 45 mol% or more or 50 mol% or more, and may be 70 mol% or less, 65 mol% or less, 60 mol% or less, 55 mol% or less or 50 mol% or less-for example, 30 to 70 mol%, 40 to 65 mol% or 50 to 60 mol%, based on 100 mol% of the total dicarboxylic component. If the content of the aromatic dicarboxylic compound is out of the above range, the biodegradability of the polyester resin may decrease, and mechanical properties (e.g., elongation) may deteriorate.

The aliphatic dicarboxylic compound may comprise an adipic acid or an ester thereof, and the aliphatic dicarboxylic compound may further comprise an aliphatic dicarboxylic acid having 4 to 14 carbon atoms or an ester thereof other than an adipic acid or an ester thereof.

In one embodiment, the aliphatic dicarboxylic compound other than adipic acid or an ester thereof may be selected from the group consisting of cyclohexane dicarboxylic acid or an ester thereof, sebacic acid or an ester thereof, isodecylsuccinic acid or an ester thereof, maleic acid or an ester thereof, fumaric acid or an ester thereof, succinic acid or an ester thereof, glutaric acid or an ester thereof, azelaic acid or an ester thereof, itaconic acid or an ester thereof, glutamic acid or an ester thereof, tetrahydrofuran-2,5-dicarboxylic acid or an ester thereof, tetrahydrofuran-3,5-dicarboxylic acid or an ester thereof, undecanedioic acid or an ester thereof, dodecanedioic acid or an ester thereof, tridecanedioic acid or an ester thereof, tetradecanedioic acid or esters thereof and combinations thereof. The ester compound of the aliphatic dicarboxylic acid may be a monoester compound, a diester compound or a mixture thereof, preferably a diester compound. For example, the diester compound of the aliphatic dicarboxylic acid may be dimethyl adipate, diethyl adipate, dimethyl succinate or diethyl succinate.

The aromatic dicarboxylic compound may comprise an aromatic dicarboxylic acid having 8 to 16 carbon atoms or an ester thereof.

In one embodiment, the aromatic dicarboxylic compound may be selected from the group consisting of phthalic acid or an ester thereof, terephthalic acid or an ester thereof, isophthalic acid or an ester thereof, 1,5-naphthalenedicarboxylic acid or an ester thereof, 2,6-naphthalenedicarboxylic acid or an ester thereof, diphenic acid or an ester thereof, p-phenylene diacetic acid or an ester thereof, o-phenylene diacetic acid or an ester thereof, and combinations thereof. The ester compound of the aromatic dicarboxylic acid may be a monoester compound, a diester compound or a mixture thereof, preferably a diester compound. For example, the ester compound of the aromatic dicarboxylic acid may be dimethyl terephthalate, diethyl terephthalate, dimethyl isophthalate or diethyl isophthalate.

The diol component used to prepare the biodegradable polyester resin of the present invention may comprise 0.1 to 23 mol% of an anhydrosugar alcohol and 0.1 to 30 mol% of an anhydrosugar alcohol-alkylene glycol, based on 100 mol% of the total diol component.

The anhydrosugar alcohol comprised in the diol component is any substance obtained by removing one or more water molecules from a compound obtained by adding hydrogen to the reducing terminal group of a saccharide, generally called hydrogenated sugar or sugar alcohol.

The anhydrosugar alcohol in the biodegradable polyester resin of the present invention can improve the heat resistance by increasing the glass transition temperature, and further improve the biodegradability by disturbing the structural regularity of the molecular chain in the resin.

In the present invention, as the anhydrosugar alcohol, dianhydrohexitol, which is a dehydrate of hexitol, can be preferably used, and more preferably, the anhydrosugar alcohol may be selected from the group consisting of isosorbide (1,4:3,6-dianhydroisorbitol), isomannide (1,4:3,6-dianhydromannitol), isoidide (1,4:3,6-dianhydroiditol) or mixtures thereof, and most preferably isosorbide may be used.

The content of anhydrosugar alcohol may be 0.1 mol% or more, 0.5 mol% or more, 1 mol% or more, 3 mol% or more, 5 mol% or more, 8 mol% or more, 10 mol% or more, or 12 mol% or more, and may be 23 mol% or less, 20 mol% or less, 19 mol% or less, 18 mol% or less, 15 mol% or less, 12 mol% or less, 10 mol% or less, or 8 mol% or less-for example, 0.1 to 23 mol%, 0.1 to 20 mol%, 0.5 to 20 mol% or 0.5 to 19 mol%, based on 100 mol% of the total diol component. If the content of anhydrosugar alcohol is less than 0.1 mol%, the effect of improving the heat resistance and biodegradability of the resin may be insignificant, and if it exceeds 23 mol%, the reactivity is low and the reaction rate is significantly slowed

down, and thus the color of the resin may be poor, and mechanical properties may deteriorate.

The anhydrosugar alcohol-alkylene glycol comprised in the diol component is an adduct obtained by reacting an alkylene oxide with a hydroxyl group(s) at both terminals or one terminal (preferably both terminals) of an anhydrosugar alcohol.

The anhydrosugar alcohol-alkylene glycol in the biodegradable polyester resin of the present invention can improve color value and mechanical properties, and disturb the structural regularity of molecular chains in the resin to further improve biodegradability.

In one embodiment, the anhydrosugar alcohol in the anhydrosugar alcohol-alkylene glycol may be selected from the group consisting of isosorbide, isomannide, isoidide or a mixture thereof, preferably isosorbide.

In one embodiment, the alkylene oxide may be a linear alkylene oxide having 2 to 8 carbon atoms or a branched alkylene oxide having 3 to 8 carbon atoms, more specifically, ethylene oxide, propylene oxide or a combination thereof.

In one embodiment, the anhydrosugar alcohol-alkylene glycol may be a compound represented by the following Formula 1:

[Formula 1]

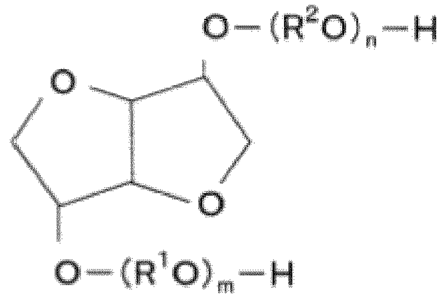

In Formula 1,

each of $R^1$ and $R^2$ independently represents a linear alkylene group having 2 to 8 carbon atoms or a branched alkylene group having 3 to 8 carbon atoms,
each of m and n independently represents an integer of 0 to 15, and m + n represents an integer of 1 to 30.

More preferably, in Formula 1,

each of $R^1$ and $R^2$ independently represents an ethylene group, a propylene group or an isopropylene group, preferably $R^1$ and $R^2$ are the same as each other,
each of m and n independently represents an integer of 1 to 14, and m + n represents an integer of 2 to 15.

In one embodiment, as the anhydrosugar alcohol-alkylene glycol, the following isosorbide-propylene glycol, isosorbide-ethylene glycol or a mixture thereof may be used.

[Isosorbide-propylene glycol]

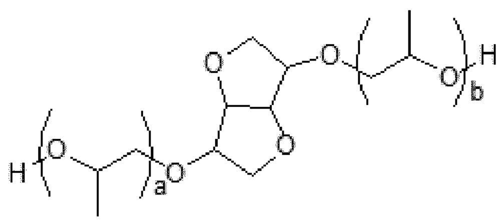

In the above formula, each of a and b independently may represent an integer of 0 to 15, and a+b may represent an integer of 1 to 30, and more preferably, each of a and b independently may represent an integer of 1 to 14, and a+b may represent an integer of 2 to 15.

[Isosorbide-ethylene glycol]

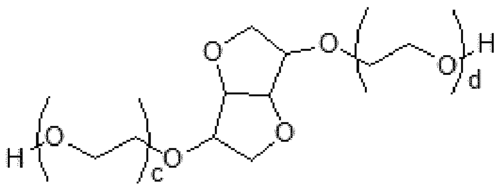

In the above formula, each of c and d independently may represent an integer of 0 to 15, and c+d may represent an integer of 1 to 30, and more preferably, each of c and d independently may represent an integer of 1 to 14, and c+d may represent an integer of 2 to 15.

The content of anhydrosugar alcohol-alkylene glycol may be 0.1 mol% or more, 0.5 mol% or more, 1 mol% or more, 3 mol% or more, 4 mol% or more, 5 mol% or more, 8 mol% or more, 10 mol% or more, 15 mol% or more, or 20 mol% or more, and may be 30 mol% or less, 28 mol% or less, 25 mol% or less, 22 mol% or less, 20 mol% or less, 16 mol% or less, 15 mol% or less, 12 mol% or less, or 10 mol% or less-for example, 0.1 to 30 mol%, 3 to 30 mol% or 4 to 28 mol%, based on 100 mol% of the total diol component. If the content of anhydrosugar alcohol-alkylene glycol is less than 0.1 mol%, the effect of improving the color value, mechanical properties and biodegradability of the resin may be insignificant, and if it exceeds 30 mol%, the melting point is sharply lowered and the reaction rate is significantly slowed due to low reactivity, and accordingly, a high molecular weight resin cannot be prepared, and the color of the resin may be poor and heat resistance may deteriorate.

In addition, the total content of anhydrosugar alcohol and anhydrosugar alcohol-alkylene glycol may be 5 mol% or more, 8 mol% or more, 10 mol% or more, 12 mol% or more, 15 mol% or more, 20 mol% or more, 25 mol% or more, 28 mol% or more, or 30 mol% or more, and may be 53 mol% or less, 50 mol% or less, 47 mol% or less, 45 mol% or less, 40 mol% or less, 35 mol% or less, 31 mol% or less, 30 mol% or less, 28 mol% or less, 25 mol% or less, or 20 mol% or less-for example, 5 to 53 mol%, 5 to 50 mol%, 5 to 47 mol%, 8 to 45 mol% or 10 to 40 mol%, based on 100 mol% of the total diol component. If the total content of anhydrosugar alcohol and anhydrosugar alcohol-alkylene glycol is less than 5 mol%, the effect of improving the biodegradability of the resin may be insignificant. If it exceeds 53 mol%, the melting point is sharply lowered and the reactivity is lowered, so it is difficult to reach the target molecular weight of the resin, and the color and heat resistance of the resin may deteriorate.

The diol component used in the present invention may further comprise an aliphatic diol other than anhydrosugar alcohol and anhydrosugar alcohol-alkylene glycol, specifically, an aliphatic diol having 2 to 15 carbon atoms, more specifically, an aliphatic diol having 2 to 10 carbon atoms-for example, one or more selected from the group consisting of ethylene glycol, diethylene glycol, triethylene glycol, propanediol (such as 1,2-propanediol and 1,3-propanediol, etc.), butanediol (such as 1,2-butanediol, 1,3-butanediol and 1,4-butanediol, etc.), pentanediol (such as 1,2-pentanediol, 1,3-pentanediol, 1,4-pentanediol and 1,5-pentanediol, etc.), hexanediol (such as 1,2-hexanediol, 1,3-hexanediol, 1,4-hexanediol, 1,5-hexanediol and 1,6-hexanediol, etc.), neopentyl glycol, cyclohexanediol (such as 1,2-cyclohexane diol, 1,3-cyclohexane diol and 1,4-cyclohexane diol, etc.), cyclohexane dimethanol (such as 1,2-cyclohexane dimethanol, 1,3-cyclohexane dimethanol and 1,4-cyclohexane dimethanol, etc.), tetramethylcyclobutanediol, tricyclodecanedimethanol, adamantanediol, 2,2-dimethyl-1,3-propanediol, 2-ethyl-2-t-butyl-1,3-propanediol, 2,2,4-trimethyl-1,6-hexane diol, or a combination thereof, preferably butane diol.

The content of aliphatic diols other than anhydrosugar alcohol and anhydrosugar alcohol-alkylene glycol may be 47 mol% or more, 50 mol% or more, 53 mol% or more, 55 mol% or more, 60 mol% or more, 65 mol% or more, or 70 mol% or more, and may be 95 mol% or less, 90 mol% or less, 88 mol% or less, 85 mol% or less, 80 mol% or less, 75 mol% or less, or 70 mol% or less-for example, 47 to 95 mol%, 50 to 95 mol%, 53 to 95 mol%, 55 to 92 mol%, or 60 to 90 mol%, based on 100 mol% of the total diol component. By using an aliphatic diol other than anhydrosugar alcohol and anhydrosugar alcohol-alkylene glycol at the above level, the heat resistance of the biodegradable polyester resin can be excellently maintained, and the content of biomass-derived components can be increased, so that it is easy to apply it as an eco-friendly product, and in particular, mechanical properties (e.g., elongation, etc.) may be further improved.

The intrinsic viscosity (IV) of the biodegradable polyester resin of the present invention can be measured by dissolving the biodegradable polyester resin in a mixture of phenol and tetrachloroethane (weight ratio = 50:50) to prepare a 0.5 wt% solution, then measuring using a Uberod viscometer at 35°C. and the intrinsic viscosity value may be more than 0.8, 0.85 or more, or 0.9 or more, and may be less than 1.3, 1.25 or less, 1.2 or less-for example, greater than 0.8 to less than 1.3, 0.85 to 1.25 or 0.9 to 1.2. If the intrinsic viscosity value is 0.8 or less, heat resistance and mechanical properties may be poor, and if the intrinsic viscosity value is 1.3 or more, the color may be poor.

In addition, the biodegradable polyester resin of the present invention has a low intrinsic viscosity change rate

and is excellent in heat resistance. The intrinsic viscosity change rate-for example, the intrinsic viscosity change rate based on the initial intrinsic viscosity-can be measured by preparing the biodegradable polyester resin in the form of pellets, placing 1 g of biodegradable polyester pellets on an aluminum plate, leaving it in an oven at 65°C for 72 hours, and then taking it out again to remove the heat history at room temperature and calculating the intrinsic viscosity. The intrinsic viscosity change rate of the biodegradable polyester resin of the present invention may be less than 30%, preferably less than 20%. As the intrinsic viscosity change rate of the biodegradable polyester resin is lower, it means less denaturation by heat-that is, it means excellent heat resistance.

In addition, the biodegradable polyester resin of the present invention has high elongation and excellent mechanical properties. The elongation of the biodegradable polyester resin may be measured, for example, according to ASTM D638, and the elongation of the biodegradable polyester resin of the present invention may be 400% or more, preferably 450% or more.

In addition, the biodegradable polyester resin of the present invention has excellent color and less yellowing. In order to confirm the superiority of the color of the biodegradable polyester resin, for example, the color-b value can be measured using ZE 6000 of Nippon denshoku, and the lower the measured color-b value, the lower the occurrence of yellowing, which means that the color is excellent. The color-b value of the biodegradable polyester resin of the present invention may be 25 or less, preferably 22 or less.

In another aspect, the present invention provides a method for preparing a biodegradable polyester resin comprising (1) a step of esterification reaction or transesterification reaction of a dicarboxylic component comprising an aliphatic dicarboxylic compound and an aromatic dicarboxylic compound and a diol component comprising an anhydrosugar alcohol and an anhydrosugar alcohol-alkylene glycol; and (2) a step of polycondensation reaction of the reaction product obtained in step (1), wherein the aliphatic dicarboxylic compound comprises an adipic acid or an ester thereof, the dicarboxylic component comprises 30 to 70 mol% of an aliphatic dicarboxylic compound; and 30 to 70 mol% of an aromatic dicarboxylic compound, based on 100 mol% of the total dicarboxylic component, the diol component comprises 0.1 to 23 mol% of an anhydrosugar alcohol and 0.1 to 30 mol% of an anhydrosugar alcohol-alkylene glycol, based on 100 mol% of the total diol component, and the total content of anhydrosugar alcohol and anhydrosugar alcohol-alkylene glycol is 5 to 53 mol% based on 100 mol% of the total diol component.

The dicarboxylic component and the diol component comprising the anhydrosugar alcohol and the anhydrosugar alcohol-alkylene glycol used in the method of the present invention may be the same as those of the above-described components.

In addition, the diol component may further comprise an aliphatic diol other than anhydrosugar alcohol and anhydrosugar alcohol-alkylene glycol. The aliphatic diol other than the anhydrosugar alcohol and anhydrosugar alcohol-alkylene glycol may be the same as those described above, and the content may be 47 to 95 mol% based on 100 mol% of the total diol component.

In one embodiment of the method for preparing a polyester resin of the present invention, (1) a step of esterification reaction or transesterification reaction of a dicarboxylic component comprising an aliphatic dicarboxylic compound and an aromatic dicarboxylic compound and a diol component comprising an anhydrosugar alcohol and an anhydrosugar alcohol-alkylene glycol is conducted. The esterification reaction or transesterification reaction can be conducted by adding the diol component and the dicarboxylic component so that the reaction molar ratio of the diol component to the dicarboxylic component (the total number of moles of the diol component/the total number of moles of the dicarboxylic component) is 1 to 1.5 under conditions of the temperature of 150 to 250°C, preferably 200 to 250°C, more preferably 200 to 240°C, and the pressure (reduced pressure) of 0.1 to 3.0 $kgf/cm^2$, preferably 0.2 to 2.0 $kgf/cm^2$.

If the reaction molar ratio of the diol component to the dicarboxylic component (total moles of the diol component/total moles of the dicarboxylic component) is less than 1, the unreacted dicarboxylic component during the polymerization reaction remains and there is a concern that the mechanical properties and color of the polyester resin may be deteriorated, and if the ratio exceeds 1.5, the polymerization reaction rate is too slow, and the productivity of the polyester resin may be lowered.

The esterification reaction time or transesterification reaction time is usually 1 to 5 hours, preferably about 3 to 4 hours, and may vary depending on the reaction temperature and pressure and the reaction molar ratio of the diol component to the dicarboxylic component.

In the method for preparing a polyester resin of the present invention, a catalyst is not required for the esterification reaction or the transesterification reaction (step (1)), but a catalyst may be used to shorten the reaction time. The esterification reaction or transesterification reaction (step (1)) may be conducted in a batch or continuous manner, and each reaction raw material may be added separately.

In the method for preparing a polyester resin of the present invention, step (2) of a polycondensation reaction of the reaction product obtained in step (1) may be conducted after the esterification reaction or transesterification reaction in step (1).

Prior to initiation of the polycondensation reaction, a polycondensation catalyst, a stabilizer or the like may be added to the reaction product of the esterification reaction or transesterification reaction. A polycondensation catalyst

commonly used in this field may be used without limitation-for example, one or a mixture of two or more selected from the group consisting of a titanium-based compound, a germanium-based compound, an antimony-based compound, an aluminum-based compound and a tin-based compound. As the stabilizer added to the polycondensation reaction, a phosphorus-based compound may be generally used-for example, phosphoric acid, trimethyl phosphate, triethyl phosphate or a mixture thereof.

The polycondensation reaction is conducted at a temperature of 200 to 280°C, preferably 210 to 260°C and more preferably 220 to 240°C, and a reduced pressure condition of 500 to 0.1 mmHg. The reduced pressure conditions are for removing by-products of the polycondensation reaction.

In one embodiment, (a) the esterification reaction or transesterification reaction may be conducted with a polymerization reactant comprising (i) a dicarboxylic component comprising adipic acid and dimethyl terephthalate and an aliphatic dicarboxylic compound other than adipic acid; and (ii) a diol component comprising isosorbide and isosorbide-alkylene glycol and, if necessary, other aliphatic diols, at a pressure of 0.1 to 3.0 $kgf/cm^2$ and a temperature of 150 to 250°C for an average residence time of 1 to 5 hours. (b) Then, by conducting a polycondensation reaction of reaction product of the esterification or transesterification reaction product under reduced pressure conditions of 500 to 0.1 mmHg and at a temperature of 200 to 280°C for an average residence time of 1 to 10 hours, the polyester resin of the present invention can be prepared. Preferably, the final vacuum degree of the polycondensation reaction is 1.0 mmHg or less, and the esterification or transesterification reaction may be conducted under an inert gas atmosphere.

The biodegradable polyester resin according to the present invention has improved heat resistance and exhibits improved color value and biodegradability while maintaining excellent mechanical properties, so it can be molded and usefully used in various articles.

Therefore, in another aspect, the present invention provides a molded article comprising the biodegradable polyester resin according to the present invention.

The present invention is explained in more detail through the following Examples and Comparative Examples. However, the scope of the present invention is not limited thereby in any manner.

**[EXAMPLES]**

<Preparation of anhydrous sugar alcohol-alkylene glycol>

Preparation Example 1: Preparation of isosorbide-ethylene glycol (ethylene oxide 5 mol adduct of isosorbide)

73.1 g (0.5 mol) of isosorbide, 110 g (2.5 mol) of ethylene oxide and 0.2 g of sodium hydroxide as a catalyst were placed in a reactor which was capable of pressurization and was equipped with a column having nitrogen gas pipe and a cooling device, a stirrer, a thermometer and a heater, and the temperature was raised gradually. Isosorbide-ethylene glycol (ethylene oxide 5 mol adduct of isosorbide) in the form in which the hydrogens of the hydroxy groups at both ends of the isosorbide are substituted with hydroxyethyl groups were prepared by reacting at a temperature of 120 to 160°C for 2 to 4 hours.

Preparation Example 2: Preparation of isosorbide-propylene glycol (propylene oxide 5 mol adduct of isosorbide)

73.1 g (0.5 mol) of isosorbide, 145 g (2.5 mol) of propylene oxide and 0.2 g of sodium hydroxide as a catalyst were placed in a reactor which was capable of pressurization and was equipped with a column having nitrogen gas pipe and a cooling device, a stirrer, a thermometer and a heater, and the temperature was raised gradually. Isosorbide-propylene glycol (propylene oxide 5 mol adduct of isosorbide) in the form in which the hydrogens of the hydroxyl groups at both ends of the isosorbide are substituted with hydroxypropyl groups were prepared by reacting at a temperature of 120 to 160°C for 2 to 4 hours.

<Preparation of biodegradable polyester resin>

Examples 1 to 11 and Comparative Examples 1 to 10

The reactants of the composition shown in Table 1 below were put in a 1L meltcondensation reactor, 750 ppm of a titanium-based catalyst was added based on acid components (dimethyl terephthalate, DMT), and then the esterification reaction was carried out by raising the temperature to 208°C, and water and alcohol produced as by-products were removed. When 80% of the alcohol, a by-product, flowed out of the system, 550 ppm of the polycondensation catalyst based on the acid component (DMT) was added, the temperature was raised to 238°C, and the pressure of the reaction system was gradually reduced to 1 mmHg, thereby biodegradable polyester resin was prepared. The physical properties of the prepared polyester resins of Examples 1 to 11 were evaluated and shown in Table 1, and the physical properties of

the prepared polyester resins of Comparative Examples 1 to 10 were evaluated and shown in Table 2 below.

<Ingredient>

- ISB-EO: isosorbide-ethylene glycol prepared in Preparation Example 1
- ISB-PO: isosorbide-propylene glycol prepared in Preparation Example 2
- DMT: dimethyl terephthalate

<Physical property evaluation>

The evaluation of the physical properties of the biodegradable polyester resins prepared in the Examples and Comparative Examples was performed as follows.
(1) Intrinsic Viscosity (IV): A 0.5 wt% solution was prepared by dissolving a biodegradable polyester resin in a mixture of phenol and tetrachloroethane (weight ratio = 50:50), and then the viscosity was measured using an Uberod viscometer at 35°C.
(2) Melting point: Using a thermal differential scanning calorimeter (DSC), the temperature was raised at a temperature increase rate of 10°C per minute and cooled to remove the thermal history, and the temperature was increased again to measure the melting point.
(3) Color (b): The color-b value was measured using ZE 6000 manufactured by Nippon Denshoku. The lower the measured color-b value, the less yellowing.
(4) Glass transition temperature: After heating the biodegradable polyester resin at a temperature increase rate of 10°C/min and cooled to room temperature, the glass transition temperature ($T_g$) at the time of re-scanning at a temperature increase rate of 10°C/min was measured.
(5) Elongation: Elongation was measured according to ASTM D638.
(6) Heat resistance - change in intrinsic viscosity: After preparing biodegradable polyester resin in the form of pellets, 1 g of biodegradable polyester pellets was placed on an aluminum plate and left in an oven at 65°C for 72 hours. After taking it out again and removing the heat history at room temperature, the intrinsic viscosity was measured to calculate the rate of change compared to the initial intrinsic viscosity.

| Intrinsic viscosity change rate | Degree of heat resistance |
|---|---|
| Less than 20% | ◎: Very good |
| 20% or more and less than 30% | ○: Good |
| 30% or more and less than 50% | △: Normal |
| 50% or more to 100% | X: Poor |

(7) Biodegradability: After freezing and pulverizing biodegradable polyester resin chips, in order to measure biodegradation under compost conditions, the frozen and pulverized resin chips were embedded in compost maintained at a temperature of 30 to 40°C and humidity of 55 to 60%. After embedding, biodegradability was measured at regular time intervals (after 1 month, after 2 months and after 3 months). The standard soil and embedding conditions used were in accordance with ASTM D 5338-92.

$$Weight\ reduction\ by\ biodegradation\ (\%) = \frac{initial\ weight\ -\ final\ weight}{initial\ weight} \times 100$$

[Table 1]

| Categories | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Dicarboxylic component | DMT (mol%) | 50 | 50 | 50 | 50 | 50 | 50 | 50 | 50 | 50 | 70 | 30 |
| | Adipic acid (mol%) | 50 | 50 | 50 | 50 | 50 | 50 | 50 | 50 | 50 | 30 | 70 |

(continued)

| Categories | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Diol component | 1,4-butanediol (mol%) | 92 | 88 | 72 | 69 | 56 | 88 | 72 | 53 | 95 | 72 | 88 |
| | Isosorbide (mol%) | 4 | 4 | 12 | 19 | 16 | 4 | 12 | 19 | 0.5 | 12 | 4 |
| | ISB-EO (mol%) | 4 | 8 | 16 | 12 | 28 | 0 | 0 | 0 | 4.5 | 16 | 8 |
| | ISB-PO (mol%) | 0 | 0 | 0 | 0 | 0 | 8 | 16 | 28 | 0 | 0 | 0 |
| Properties | Intrinsic viscosity (dl/g) | 1.2 | 1.0 | 1.0 | 1.0 | 1.1 | 1.1 | 0.9 | 1.1 | 1.1 | 1.2 | 0.9 |
| | Melting point (°C) | 124 | 112 | 107 | 113 | 105 | 122 | 118 | 115 | 127 | 130 | 112 |
| | Color (b) | 21 | 22 | 20 | 12 | 18 | 22 | 19 | 13 | 22 | 19 | 20 |
| | Glass transition temperature (°C) | -21 | -22 | -16 | -13 | -16 | -20 | -17 | -14 | -22 | -18 | -17 |
| | Heat resistance (change in intrinsic viscosity) | ◎ | ○ | ○ | ◎ | ○ | ◎ | ◎ | ○ | ◎ | ○ | ○ |
| | Elongation (%) | 473 | 696 | 649 | 740 | 699 | 652 | 632 | 700 | 450 | 625 | 660 |
| Weight reduction by biodegradation (%) | After 1 month | 11.6 | 9.6 | 13.4 | 19.8 | 15.9 | 4.8 | 13.5 | 19.4 | 10.2 | 11.8 | 12.4 |
| | After 2 months | 25.6 | 21.2 | 34.6 | 39.7 | 37.2 | 31.5 | 38.6 | 37.9 | 22.5 | 26.9 | 29.2 |
| | After 3 months | 49.8 | 45.6 | 52.3 | 60.2 | 55.9 | 51.6 | 61.2 | 60.5 | 47.6 | 50.2 | 53.3 |

[Table 2]

| Categories | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Dicarboxylic component | DMT (mol%) | 50 | 50 | 50 | 50 | 50 | 50 | 80 | 20 | 50 | 50 | 50 | 50 |
| | Adipic acid (mol%) | 50 | 50 | 50 | 50 | 50 | 50 | 20 | 80 | 50 | 50 | 50 | 50 |
| Diol component | 1,4-butanediol (mol%) | 100 | 76 | 68 | 65 | 44 | 0 | 92 | 92 | 95.5 | 95.5 | 72 | 64 |
| | Isosorbide (mol%) | 0 | 24 | 0 | 0 | 24 | 0 | 4 | 4 | 0.05 | 4 | 24 | 4 |
| | ISB-EO (mol%) | 0 | 0 | 32 | 0 | 32 | 100 | 4 | 4 | 0 | 0.05 | 4 | 32 |
| | ISB-PO (mol%) | 0 | 0 | 0 | 35 | 0 | 0 | 0 | 0 | 4 | 0 | 0 | 0 |

(continued)

| Categories | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Properties | Intrinsic viscosity (dl/g) | 1.3 | 0.6 | 0.8 | 0.8 | 0.6 | 0.7 | 1.2 | 1.1 | 1.2 | 1.1 | 0.6 | 0.8 |
| | Melting point (°C) | 132 | 123 | 97 | 95 | 90 | 85 | 176 | 124 | 125 | 129 | 120 | 95 |
| | Color (b) | 27 | 28 | 30 | 32 | 32 | 35 | 14 | 13 | 27 | 28 | 32 | 31 |
| | Glass transition temperature (°C) | -25 | -17 | -24 | -25 | -27 | -29 | 52 | -29 | -24 | -25 | -18 | -23 |
| | Heat resistance (change in intrinsic viscosity) | △ | ○ | △ | X | X | △ | ○ | X | △ | △ | △ | X |
| | Elongation (%) | 650 | 250 | 502 | 487 | 458 | 550 | 220 | 610 | 635 | 630 | 235 | 500 |
| Weight reduction by biodegradation (%) | After 1 month | 18.0 | 15.8 | 19.2 | 19.6 | 23.1 | 20.5 | 1.2 | 19.3 | 17.8 | 17.5 | 16.0 | 19.8 |
| | After 2 months | 36.0 | 32.4 | 38.8 | 39.1 | 45.2 | 43.8 | 4.4 | 37.2 | 35.2 | 35 | 33.5 | 39.2 |
| | After 3 months | 53.0 | 50.2 | 57.6 | 58.0 | 68.5 | 65.5 | 7.1 | 54.3 | 52.1 | 52.1 | 51.9 | 58.1 |

As shown in Table 1, since Examples 1 to 11 according to the present invention comprise anhydrosugar alcohol (isosorbide) and anhydrosugar alcohol-alkylene glycol (isosorbide-alkylene glycol) in a specific content range, the resin had a high glass transition temperature, excellent heat resistance (change in intrinsic viscosity) and color, and excellent mechanical properties (elongation) and biodegradability were maintained.

However, as shown in Table 2 above, in the case of a conventional biodegradable polyester (PBAT) resin in which anhydrosugar alcohol and anhydrosugar alcohol-alkylene glycol are not used (Comparative Example 1), the glass transition temperature is lowered, and the color was poor, and the intrinsic viscosity change rate was higher-30% or more to less than 50%-resulting in poor heat resistance. In the case of the biodegradable polyester resin in which anhydrosugar alcohol-alkylene was not used and an excessive anhydrosugar alcohol was used (Comparative Example 2), the color was poor and the mechanical properties (elongation) were poor. In the case of biodegradable polyester resins in which anhydrosugar alcohol was not used and anhydrosugar alcohol-alkylene glycol was used in excess (Comparative Examples 3, 4 and 6), the glass transition temperature was lowered, the color was poor, and the intrinsic viscosity change rates were higher-30% or more to less than 50%, or 50% or more to 100%-resulting in poor heat resistance. In the case of a biodegradable polyester resin in which both anhydrosugar alcohol and anhydrosugar alcohol-alkylene glycol were used in excess (Comparative Example 5), a low molecular weight biodegradable polyester resin was obtained due to reduced reactivity, and the glass transition temperature was lowered, the color was poor, and the intrinsic viscosity change rate was high-50% or more to 100%-resulting in poor heat resistance.

In addition, in the case of the biodegradable polyester resin in which the aromatic dicarboxylic compound was used in excess (Comparative Example 7), the biodegradability was lowered, and the mechanical properties (elongation) were poor. In the case of the biodegradable polyester resin in which the aliphatic dicarboxylic compound was used in excess (Comparative Example 8), the glass transition temperature was lowered, and the intrinsic viscosity change rate was very high-50% or more to 100%-resulting in very poor heat resistance. In the case of the biodegradable polyester resin in which a small amount of anhydrosugar alcohol was used (Comparative Example 9), the glass transition temperature was lowered, and the intrinsic viscosity change rate was high-30% or more to less than 50%-resulting in poor heat resistance. In the case of a biodegradable polyester resin in which anhydrosugar alcohol-alkylene glycol was used in a small amount (Comparative Example 10), the glass transition temperature was lowered and the intrinsic viscosity change rate was high-30% or more to less than 50%-resulting in poor heat resistance. In the case of the biodegradable polyester resin in which an excessive amount of anhydrosugar alcohol was used (Comparative Example 11), a low molecular weight biodegradable polyester resin was obtained due to reduced reactivity, and the color and the mechanical properties

(elongation) were poor, and the intrinsic viscosity change rate was also high-30% or more to less than 50%-resulting in poor heat resistance. In the case of the biodegradable polyester resin in which an excessive amount of anhydrosugar alcohol-alkylene glycol was used (Comparative Example 12), a low molecular weight biodegradable polyester resin was obtained due to reduced reactivity, and the color was poor, and the intrinsic viscosity change rate was very high-50% or more to 100%-resulting in very poor heat resistance.

## Claims

1. A biodegradable polyester resin comprising a repeating unit derived from a dicarboxylic component; and a repeating unit derived from a diol component,

   wherein the dicarboxylic component comprises 30 to 70 mol% of an aliphatic dicarboxylic compound; and 30 to 70 mol% of an aromatic dicarboxylic compound, based on 100 mol% of the total dicarboxylic component,
   the aliphatic dicarboxylic compound comprises an adipic acid or an ester thereof,
   the diol component comprises 0.1 to 23 mol% of an anhydrosugar alcohol and 0.1 to 30 mol% of an anhydrosugar alcohol-alkylene glycol, based on 100 mol% of the total diol component, and
   the total content of anhydrosugar alcohol and anhydrosugar alcohol-alkylene glycol is 5 to 53 mol% based on 100 mol% of the total diol component.

2. The biodegradable polyester resin according to claim 1, wherein the aliphatic dicarboxylic compound further comprises an aliphatic dicarboxylic acid having 4 to 14 carbon atoms or an ester thereof other than adipic acid or an ester thereof, and the aromatic dicarboxylic compound comprises an aromatic dicarboxylic acid having 8 to 16 carbon atoms or an ester thereof.

3. The biodegradable polyester resin according to claim 2,

   wherein the aliphatic dicarboxylic compound other than adipic acid or an ester thereof is selected from the group consisting of cyclohexane dicarboxylic acid or an ester thereof, sebacic acid or an ester thereof, isodecylsuccinic acid or an ester thereof, maleic acid or an ester thereof, fumaric acid or an ester thereof, succinic acid or an ester thereof, glutaric acid or an ester thereof, azelaic acid or an ester thereof, itaconic acid or an ester thereof, glutamic acid or an ester thereof, tetrahydrofuran-2,5-dicarboxylic acid or an ester thereof, tetrahydrofuran-3,5-dicarboxylic acid or an ester thereof, undecanedioic acid or an ester thereof, dodecanedioic acid or an ester thereof, tridecanedioic acid or an ester thereof, tetradecanedioic acid or esters thereof and combinations thereof; and
   the aromatic dicarboxylic compound is selected from the group consisting of phthalic acid or an ester thereof, terephthalic acid or an ester thereof, isophthalic acid or an ester thereof, 1,5-naphthalenedicarboxylic acid or an ester thereof, 2,6-naphthalenedicarboxylic acid or an ester thereof, diphenic acid or an ester thereof, p-phenylene diacetic acid or an ester thereof, o-phenylene diacetic acid or esters thereof, and combinations thereof.

4. The biodegradable polyester resin according to claim 1, wherein the anhydrosugar alcohol is selected from the group consisting of isosorbide, isomannide, isoidide or mixtures thereof.

5. The biodegradable polyester resin according to claim 1, wherein the anhydrosugar alcohol-alkylene glycol is an adduct obtained by reacting an alkylene oxide with a hydroxyl group(s) at both terminals or one terminal of an anhydrosugar alcohol.

6. The biodegradable polyester resin according to claim 5, wherein the anhydrosugar alcohol is selected from the group consisting of isosorbide, isomannide, isoidide or mixtures thereof, and the alkylene oxide is a linear alkylene oxide having 2 to 8 carbon atoms or a branched alkylene oxide having 3 to 8 carbon atoms.

7. The biodegradable polyester resin according to claim 1, wherein the anhydrosugar alcohol-alkylene glycol is a compound represented by the following Formula 1:

[Formula 1]

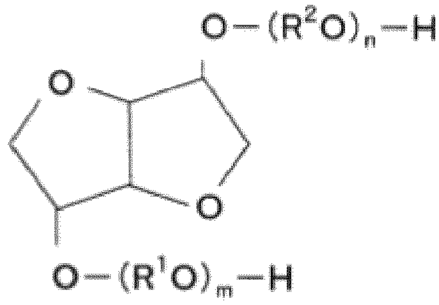

In Formula 1,

each of $R^1$ and $R^2$ independently represents a linear alkylene group having 2 to 8 carbon atoms or a branched alkylene group having 3 to 8 carbon atoms,
each of m and n independently represents an integer of 0 to 15, and
m + n represents an integer of 1 to 30.

**8.** The biodegradable polyester resin according to claim 1, wherein the diol component further comprises an aliphatic diol other than anhydrosugar alcohol and anhydrosugar alcohol-alkylene glycol, and the content of the aliphatic diol other than anhydrosugar alcohol and anhydrosugar alcohol-alkylene glycol is 47 to 95 mol% based on 100 mol% of the total diol component.

**9.** The biodegradable polyester resin according to claim 8, wherein the aliphatic diol other than anhydrosugar alcohol and anhydrosugar alcohol-alkylene glycol is selected from the group consisting of ethylene glycol, diethylene glycol, triethylene glycol, 1,2-propanediol, 1,3-propanediol, 1,2-butanediol, 1,3-butanediol, 1,4-butanediol, 1,2-pentanediol, 1,3-pentanediol, 1,4-pentanediol, 1,5-pentanediol, 1,2-hexanediol, 1,3-hexanediol, 1,4-hexanediol, 1,5-hexanediol, 1,6-hexanediol, neopentyl glycol, 1,2-cyclohexanediol, 1,3-cyclohexanediol, 1,4-cyclohexanediol, 1,2-cyclohexane dimethanol, 1,3-cyclohexane dimethanol, 1,4-cyclohexane dimethanol, tetramethylcyclobutanediol, tricyclodecane dimethanol, adamantanediol, 2,2-dimethyl-1,3-propanediol, 2-ethyl-2-t-butyl-1,3-propanediol, 2,2,4-trimethyl-1,6-hexanediol or combinations thereof.

**10.** A method for preparing a biodegradable polyester resin comprising

(1) a step of esterification reaction or transesterification reaction of a dicarboxylic component comprising an aliphatic dicarboxylic compound and an aromatic dicarboxylic compound and a diol component comprising an anhydrosugar alcohol and an anhydrosugar alcohol-alkylene glycol; and
(2) a step of polycondensation reaction of the reaction product obtained in step (1),
wherein the aliphatic dicarboxylic compound comprises an adipic acid or an ester thereof,
the dicarboxylic component comprises 30 to 70 mol% of an aliphatic dicarboxylic compound; and 30 to 70 mol% of an aromatic dicarboxylic compound, based on 100 mol% of the total dicarboxylic component,
the diol component comprises 0.1 to 23 mol% of an anhydrosugar alcohol and 0.1 to 30 mol% of an anhydrosugar alcohol-alkylene glycol, based on 100 mol% of the total diol component, and
the total content of anhydrosugar alcohol and anhydrosugar alcohol-alkylene glycol is 5 to 53 mol% based on 100 mol% of the total diol component.

**11.** The method for preparing a biodegradable polyester resin according to claim 10, wherein the diol component further comprises an aliphatic diol other than anhydrosugar alcohol and anhydrosugar alcohol-alkylene glycol, and the content of the aliphatic diol other than anhydrosugar alcohol and anhydrosugar alcohol-alkylene glycol is 47 to 95 mol% based on 100 mol% of the total diol component.

**12.** The method for preparing a biodegradable polyester resin according to claim 10, wherein in step (1), the reaction molar ratio of the diol component to the dicarboxylic component (the total number of moles of the diol component / the total number of moles of the dicarboxylic component) is 1.0 to 1.5.

**13.** A molded article comprising the biodegradable polyester resin according to any of claims 1 to 9.

## Patentansprüche

1. Biologisch abbaubares Polyesterharz, umfassend eine sich wiederholende Einheit, die von einer Dicarbonsäure-Komponente deriviert ist, und eine sich wiederholende Einheit, die von einer Diol-Komponente deriviert ist, wobei die Dicarbonsäure-Komponente 30 bis 70 mol-% einer aliphatischen Dicarbonsäure-Verbindung umfasst, und 30 bis 70 mol-% einer aromatischen Dicarbonsäure-Verbindung, bezogen auf 100 mol-% der gesamten Dicarbonsäure-Komponente, wobei die aliphatische Dicarbonsäure-Verbindung eine Adipinsäure oder einen Ester davon umfasst, die Diol-Komponente 0,1 bis 23 mol-% eines Anhydrozuckeralkohols und 0,1 bis 30 mol-% eines Anhydrozuckeralkohol-Alkylen-Glykol, bezogen auf 100 mol-% der gesamten Diol-Komponente, und der Gesamtgehalt an Anhydrozuckeralkohol und Anhydrozuckeralkohol-Alkylen-Glykol beträgt 5 bis 53 mol-%, bezogen auf 100 mol-% der gesamten Diol-Komponente.

2. Biologisch abbaubares Polyesterharz nach Anspruch 1, wobei die aliphatische Dicarbonsäure-Verbindung ferner eine aliphatische Dicarbonsäure mit 4 bis 14 Kohlenstoffatomen oder einen Ester davon, der nicht Adipinsäure oder ein Ester davon ist, umfasst und die aromatische Dicarbonsäure-Verbindung eine aromatische Dicarbonsäure mit 8 bis 16 Kohlenstoffatomen oder einen Ester davon umfasst.

3. Biologisch abbaubares Polyesterharz nach Anspruch 2,

   wobei die aliphatische Dicarbonsäure-Verbindung, die keine Adipinsäure oder ein Ester davon ist, ausgewählt ist aus einer Gruppe, bestehend aus Cyclohexandicarbonsäure oder einem Ester davon, Sebacinsäure oder einem Ester davon, Isodecylbernsteinsäure oder einem Ester davon, Maleinsäure oder einem Ester davon, Fumarsäure oder einem Ester davon, Bernsteinsäure oder einem Ester davon, Glutarsäure oder einem Ester davon, Azelainsäure oder einem Ester davon, Itaconsäure oder einem Ester davon, Glutaminsäure oder einem Ester davon, Tetrahydrofuran-2,5-Dicarbonsäure oder einem Ester davon, Tetrahydrofuran-3,5-Dicarbonsäure oder einem Ester davon, Undecandisäure oder einem Ester davon, Dodecandisäure oder einem Ester davon, Tridecandisäure oder einem Ester davon, Tetradecandisäure oder Ester davon und Kombinationen davon; und
   die aromatische Dicarbonsäure-Verbindung ausgewählt ist aus einer Gruppe, bestehend aus Phthalsäure oder einem Ester davon, Terephthalsäure oder einem Ester davon, Isophthalsäure oder einem Ester davon, 1,5-Naphthalindicarbonsäure oder einem Ester davon, 2,6-Naphthalindicarbonsäure oder einem Ester davon, Diphenolsäure oder einem Ester davon, p-Phenylendiacetatsäure oder einem Ester davon, o-Phenylendiacetatsäure oder Estern davon und Kombinationen davon.

4. Biologisch abbaubares Polyesterharz nach Anspruch 1, wobei der Anhydrozuckeralkohol ausgewählt ist aus einer Gruppe, bestehend aus Isosorbid, Isomannid, Isoidid oder Mischungen davon.

5. Biologisch abbaubares Polyesterharz nach Anspruch 1, wobei der Anhydrozuckeralkohol-Alkylen-Glykol ein Addukt ist, das durch Umsetzung eines Alkylenoxids mit einer oder mehreren Hydroxylgruppen an beiden Enden oder einem Ende eines Anhydrozuckeralkohols erhalten wird.

6. Biologisch abbaubares Polyesterharz nach Anspruch 5, wobei der Anhydrozuckeralkohol ausgewählt ist aus einer Gruppe, bestehend aus Isosorbid, Isomannid, Isoidid oder Mischungen davon, und das Alkylenoxid ein lineares Alkylenoxid mit 2 bis 8 Kohlenstoffatomen oder ein verzweigtes Alkylenoxid mit 3 bis 8 Kohlenstoffatomen ist.

7. Biologisch abbaubares Polyesterharz nach Anspruch 1, wobei der Anhydrozuckeralkohol-Alkylen-Glykol eine Verbindung ist, die durch die folgende Strukturformel 1 dargestellt wird:

[Strukturformel 1]

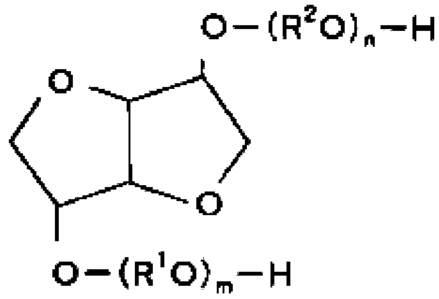

In Strukturformel 1,

steht jedes $R^1$ und $R^2$ unabhängig voneinander für eine lineare Alkylengruppe mit 2 bis 8 Kohlenstoffatomen oder eine verzweigte Alkylengruppe mit 3 bis 8 Kohlenstoffatomen,
jedes m und n steht unabhängig voneinander für eine ganze Zahl von 0 bis 15 und
m + n steht für eine ganze Zahl von 1 bis 30.

**8.** Biologisch abbaubares Polyesterharz nach Anspruch 1, wobei die Diol-Komponente ferner ein aliphatisches Diol außer Anhydrozuckeralkohol und Anhydrozuckeralkohol-Alkylen-Glykol umfasst und der Gehalt des aliphatischen Diols außer Anhydrozuckeralkohol und Anhydrozuckeralkohol-Alkylen-Glykol 47 bis 95 mol-% bezogen auf 100 mol-% der gesamten Diol-Komponente beträgt.

**9.** Biologisch abbaubares Polyesterharz nach Anspruch 8, wobei das aliphatische Diol, das kein Anhydrozuckeralkohol und kein Anhydrozuckeralkohol-Alkylen-Glykol ist, ausgewählt ist aus einer Gruppe, bestehend aus Ethylenglykol, Diethylenglykol, Triethylenglykol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol, 1,6-Hexandiol, Neopentylglykol, 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, Tetramethylcyclobutandiol, Tricyclodecandimethanol, Adamantandiol, 2,2-Dimethyl-1,3-propandiol, 2-Ethyl-2-t-butyl-1,3-propandiol, 2,2,4-Trimethyl-1,6-hexandiol oder Kombinationen davon.

**10.** Verfahren zur Herstellung eines biologisch abbaubaren Polyesterharzes, umfassend

(1) einen Schritt einer Veresterungsreaktion oder Umesterungsreaktion einer Dicarbonsäure-Komponente, die eine aliphatische Dicarbonsäure-Verbindung und eine aromatische Dicarbonsäure-Verbindung umfasst, und einer Diol-Komponente, die einen Anhydrozuckeralkohol und ein Anhydrozuckeralkohol-Alkylen-Glykol umfasst; und
(2) einen Schritt einer Polykondensationsreaktion des in Schritt (1) erhaltenen Reaktionsprodukts,
wobei die aliphatische Dicarbonsäure-Verbindung eine Adipinsäure oder einen Ester davon umfasst,
die Dicarbonsäure-Komponente 30 bis 70 mol-% einer aliphatischen Dicarbonsäure-Verbindung umfasst; und 30 bis 70 mol-% einer aromatischen Dicarbonsäure-Verbindung, bezogen auf 100 mol-% der gesamten Dicarbonsäure-Komponente,
die Diol-Komponente 0,1 bis 23 mol-% eines Anhydrozuckeralkohols und 0,1 bis 30 mol-% eines Anhydrozuckeralkohol-Alkylen-Glykols umfasst, basierend auf 100 mol-% der gesamten Diol-Komponente, und
der Gesamtgehalt an Anhydrozuckeralkohol und Anhydrozuckeralkohol-Alkylen-Glykol beträgt 5 bis 53 mol-%, basierend auf 100 mol-% der gesamten Diol-Komponente.

**11.** Verfahren zur Herstellung eines biologisch abbaubaren Polyesterharzes nach Anspruch 10, wobei die Diol-Komponente ferner ein aliphatisches Diol außer Anhydrozuckeralkohol und Anhydrozuckeralkohol-Alkylen-Glykol umfasst, und der Gehalt des aliphatischen Diols, das kein Anhydrozuckeralkohol und kein Anhydrozuckeralkohol-Alkylen-Glykol ist, 47 bis 95 mol-%, bezogen auf 100 mol-% der gesamten Diol-Komponente, beträgt.

**12.** Verfahren zur Herstellung eines biologisch abbaubaren Polyesterharzes nach Anspruch 10, wobei in Schritt (1) das molare Reaktionsverhältnis der Diol-Komponente zur Dicarbonsäure-Komponente (Gesamtmolzahl der Diol-Komponente / Gesamtmolzahl der Dicarbonsäure-Komponente) 1,0 bis 1,5 beträgt.

13. Formkörper, der das biologisch abbaubare Polyesterharz nach einem der Ansprüche 1 bis 9 umfasst.

**Revendications**

1. Résine polyester biodégradable comprenant une unité de répétition dérivée d'un composant dicarboxylique ; et une unité de répétition dérivée d'un composant diol,

   dans laquelle le composant dicarboxylique comprend de 30 à 70 % en moles d'un composé dicarboxylique aliphatique ; et de 30 à 70 % en moles d'un composé dicarboxylique aromatique, par rapport à 100 % en moles du composant dicarboxylique total,
   le composé dicarboxylique aliphatique comprend un acide adipique ou un ester de celui-ci,
   le composant diol comprend de 0,1 à 23 % en moles d'un alcool de sucre anhydre et de 0,1 à 30 % en moles d'un alcool de sucre anhydre-alkylène glycol, par rapport à 100 % en moles du composant diol total, et
   la teneur totale en alcool de sucre anhydre et en alcool de sucre anhydre-alkylène glycol est de 5 à 53 % en moles par rapport à 100 % en moles du composant diol total.

2. Résine polyester biodégradable selon la revendication 1, dans laquelle le composé dicarboxylique aliphatique comprend en outre un acide dicarboxylique aliphatique ayant de 4 à 14 atomes de carbone ou un ester de celui-ci autre que l'acide adipique ou un ester de celui-ci, et le composé dicarboxylique aromatique comprend un acide dicarboxylique aromatique ayant de 8 à 16 atomes de carbone ou un ester de celui-ci.

3. Résine polyester biodégradable selon la revendication 2,

   dans laquelle le composé dicarboxylique aliphatique autre que l'acide adipique ou un ester de celui-ci est choisi dans le groupe constitué par l'acide cyclohexane dicarboxylique ou un ester de celui-ci, l'acide sébacique ou un ester de celui-ci, l'acide isodécylsuccinique ou un ester de celui-ci, l'acide maléique ou un ester de celui-ci, l'acide fumarique ou un ester de celui-ci, l'acide succinique ou un ester de celui-ci, l'acide glutarique ou un ester de celui-ci, l'acide azélaïque ou un ester de celui-ci, l'acide itaconique ou un ester de celui-ci, l'acide glutamique ou un ester de celui-ci, l'acide tétrahydrofuran-2,5-dicarboxylique ou un ester de celui-ci, l'acide tétrahydrofuran-3,5-dicarboxylique ou un ester de celui-ci, l'acide undécanedioïque ou un ester de celui-ci, l'acide dodécanedioïque ou un ester de celui-ci, l'acide tridécanedioïque ou un ester de celui-ci, l'acide tétradécanedioïque ou les esters de celui-ci, et les combinaisons de ceux-ci ; et
   le composé dicarboxylique aromatique est choisi dans le groupe constitué par l'acide phtalique ou un ester de celui-ci, l'acide téréphtalique ou un ester de celui-ci, l'acide isophtalique ou un ester de celui-ci, l'acide 1,5-naphtalènedicarboxylique ou un ester de celui-ci, l'acide 2,6-naphtalènedicarboxylique ou un ester de celui-ci, l'acide diphénique ou un ester de celui-ci, l'acide p-phénylène diacétique ou un ester de celui-ci, l'acide ophénylène diacétique ou les esters de celui-ci, et les combinaisons de ceux-ci.

4. Résine polyester biodégradable selon la revendication 1, dans laquelle l'alcool de sucre anhydre est choisi dans le groupe constitué par l'isosorbide, l'isomannide, l'isoidide ou les mélanges de ceux-ci.

5. Résine polyester biodégradable selon la revendication 1, dans laquelle l'alcool de sucre anhydre-alkylène glycol est un produit d'addition obtenu par réaction d'un oxyde d'alkylène avec un(des) groupe(s) hydroxyle aux deux extrémités ou à une extrémité d'un alcool de sucre anhydre.

6. Résine polyester biodégradable selon la revendication 5, dans laquelle l'alcool de sucre anhydre est choisi dans le groupe constitué par l'isosorbide, l'isomannide, l'isoidide ou les mélanges de ceux-ci, et l'oxyde d'alkylène est un oxyde d'alkylène linéaire ayant de 2 à 8 atomes de carbone ou un oxyde d'alkylène ramifié ayant de 3 à 8 atomes de carbone.

7. Résine polyester biodégradable selon la revendication 1, dans laquelle l'alcool de sucre anhydre-alkylène glycol est un composé représenté par la formule 1 suivante :

[Formule 1]

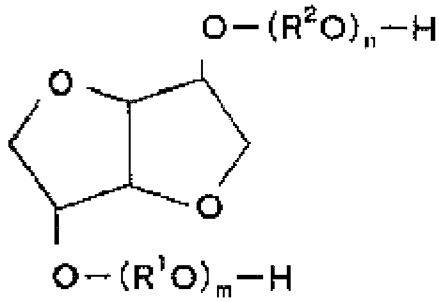

dans la formule 1,

chacun de $R^1$ et $R^2$ représente indépendamment un groupe alkylène linéaire ayant de 2 à 8 atomes de carbone ou un groupe alkylène ramifié ayant de 3 à 8 atomes de carbone,
chacun de m et n représente indépendamment un nombre entier de 0 à 15, et

m + n représente un nombre entier de 1 à 30.

8. Résine polyester biodégradable selon la revendication 1, dans laquelle le composant diol comprend en outre un diol aliphatique autre que l'alcool de sucre anhydre et l'alcool de sucre anhydre-alkylène glycol, et la teneur du diol aliphatique autre que l'alcool de sucre anhydre et l'alcool de sucre anhydre-alkylène glycol est de 47 à 95 % en moles par rapport à 100 % en moles du composant diol total.

9. Résine polyester biodégradable selon la revendication 8, dans laquelle le diol aliphatique autre que l'alcool de sucre anhydre et l'alcool de sucre anhydre-alkylène glycol est choisi dans le groupe constitué par l'éthylène glycol, le diéthylène glycol, le triéthylène glycol, le 1,2-propanediol, le 1,3-propanediol, le 1,2-butanediol, le 1,3-butanediol, le 1,4-butanediol, le 1,2-pentanediol, le 1,3-pentanediol, le 1,4-pentanediol, le 1,5-pentanediol, le 1,2-hexanediol, le 1,3-hexanediol, le 1,4-hexanediol, le 1,5-hexanediol, le 1,6-hexanediol, le néopentyl glycol, le 1,2-cyclohexanediol, le 1,3-cyclohexanediol, le 1,4-cyclohexanediol, le 1,2-cyclohexane diméthanol, le 1,3-cyclohexane diméthanol, le 1,4-cyclohexane diméthanol, le tétraméthylcyclobutanediol, le tricyclodécane diméthanol, l'adamantanediol, le 2,2-diméthyl-1,3-propanediol, le 2-éthyl-2-t-butyl-1,3-propanediol, le 2,2,4-triméthyl-1,6-hexanediol ou les combinaisons de ceux-ci.

10. Procédé de préparation d'une résine polyester biodégradable comprenant

(1) une étape de réaction d'estérification ou de réaction de transestérification d'un composant dicarboxylique comprenant un composé dicarboxylique aliphatique ainsi qu'un composé dicarboxylique aromatique et un composant diol comprenant un alcool de sucre anhydre ainsi qu'un alcool de sucre anhydre-alkylène glycol ; et
(2) une étape de réaction de polycondensation du produit de réaction obtenu à l'étape (1),
dans lequel le composé dicarboxylique aliphatique comprend un acide adipique ou un ester de celui-ci,
le composant dicarboxylique comprend de 30 à 70 % en moles d'un composé dicarboxylique aliphatique ; et de 30 à 70 % en moles d'un composé dicarboxylique aromatique, par rapport à 100 % en moles du composant dicarboxylique total,
le composant diol comprend de 0,1 à 23 % en moles d'un alcool de sucre anhydre et de 0,1 à 30 % en moles d'un alcool de sucre anhydre-alkylène glycol, par rapport à 100 % en moles du composant diol total, et
la teneur totale en alcool de sucre anhydre et en alcool de sucre anhydre-alkylène glycol est de 5 à 53 % en moles par rapport à 100 % en moles du composant diol total.

11. Procédé de préparation d'une résine polyester biodégradable selon la revendication 10, dans lequel le composant diol comprend en outre un diol aliphatique autre que l'alcool de sucre anhydre et l'alcool de sucre anhydre-alkylène glycol, et la teneur du diol aliphatique autre que l'alcool de sucre anhydre et l'alcool de sucre anhydre-alkylène glycol est de 47 à 95 % en moles par rapport à 100 % en moles du composant diol total.

12. Procédé de préparation d'une résine polyester biodégradable selon la revendication 10, dans lequel à l'étape (1), le

rapport molaire de réaction du composant diol au composant dicarboxylique (le nombre total de moles du composant diol / le nombre total de moles du composant dicarboxylique) est de 1,0 à 1,5.

**13.** Article moulé comprenant la résine polyester biodégradable selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 101079518
- KR 1020120066904
- US 20190161574 A1
- US 20130295306 A1
- KR 101826754 B1
- KR 101404983 B1